# EUROPEAN PATENT SPECIFICATION

(11) **EP 4 145 618 B1**
(45) Date of publication and mention of the grant of the patent: **11.06.2025**
(21) Application number: 21809626.1
(22) Date of filing: 22.04.2021
(51) Int. Cl.: H01M 50/289, H01M 50/593, H01M 50/242, H01M 50/209, H01M 50/103

(54) **BATTERY, BATTERY PACK, AND VEHICLE**
BATTERIE, BATTERIEPACK UND FAHRZEUG
BATTERIE, BLOC-BATTERIE ET VÉHICULE

(30) Priority: 18.05.2020 CN 202020848060 U
(43) Date of publication of application: 08.03.2023
(73) Proprietor: BYD Company Limited, Shenzhen, Guangdong 518118 (CN)
(72) Inventor: HU, Shichao, Shenzhen, Guangdong 518118 (CN); JIANG, Yimiao, Shenzhen, Guangdong 518118 (CN); ZHANG, Mingming, Shenzhen, Guangdong 518118 (CN)
(74) Representative: Dehns Germany Partnerschaft mbB
(86) International application number: PCT/CN2021/089032
(87) International publication number: WO 2021/233060

(56) References cited:
- WO-A1-2017/169728
- CN-A- 106 486 623
- CN-A- 110 518 156
- CN-A- 110 828 717
- CN-A- 110 828 744
- CN-A- 110 828 745
- CN-A- 110 828 745
- CN-U- 207 818 692
- CN-U- 207 818 692
- CN-U- 212 392 355
- US-A1- 2015 162 639

## Description

### FIELD

The present invention relates to the field of batteries, and more specifically, to a battery, a battery pack, and an automobile.

### BACKGROUND

In the related art, in order to increase the battery capacity, multiple electrode cores are connected in series in the housing of the battery, so the connection parts between the electrode cores are prone to be twisted and broken during the use of the battery. In addition, under vibration and bumpy conditions, the multiple electrode cores are prone to move in the housing, and generate relative displacement therebetween, which will damage the electrode cores. For example, a current collector is damaged, a separator is wrinkled, and an active material layer on the electrode peels off, which will lead to poor stability of the battery, causing safety problems. CN 110 828 745 A discloses a battery comprising adjacent electrode core sets, the gap between which being filled with a packaging portion. CN 207 818 692 U discloses a different battery type also comprising an insulating spacer connected to the case via a protrusion-hole connection. CN 106 486 623 A discloses yet another battery of a different type also comprising an insulating spacer connected to the case via a groove-protrusion connection. US 2015/162639 A1 discloses the use of a metal member in such an insulating spacer to fix the same to the housing, especially by welding. Finally, WO 2017169728 A1 discloses yet another different battery type wherein an insulating spacer is fixed to the battery case by an adhesive or glue.

### SUMMARY

The present invention according to the independent claims is to resolve at least one of the technical problems in the prior art. Therefore, the present invention provides a battery according to claim 1 in which electrode core sets are connected more reliably.

Provided is a battery, including a housing and multiple electrode core sets encapsulated in the housing. Every two adjacent electrode core sets are connected in series. The electrode core set includes an encapsulation film and at least one electrode core, and the electrode core is arranged in an accommodating cavity formed by the encapsulation film. The electrode core set includes a first electrode and a second electrode for leading out current. The first electrode and the second electrode protrude out of the encapsulation film. The first electrode of one of the two adjacent electrode core sets is electrically connected to the second electrode of the other electrode core set. A gap between the two adjacent electrode core sets is filled with an insulating material so as to form an insulating spacer between the two adjacent electrode core sets. A connection part of the two adjacent electrode core sets is arranged in the insulating spacer.

The insulating spacer is arranged between every two adjacent electrode core sets, and the connection part of the two electrode core sets is arranged in the insulating spacer. In this way, the insulating spacer can be well utilized to fix the electrode core sets, so as to prevent the relative movement between the electrode core sets, maintain the reliable connection between the electrode core sets and increase the strength of the connection part, thereby preventing the connection part between the two adjacent electrode core sets from being twisted or broken during the use of the battery, and improving the connection stability between the electrode core sets.

Provided is a battery pack, including the above-mentioned battery.

Provided is an automobile, including the above-mentioned battery pack.

Additional aspects and advantages of the present invention will be given in the following description, some of which will become apparent from the following description or may be learned from practices of the present invention.

### BRIEF DESCRIPTION OF THE FIGURES

The foregoing and/or additional aspects and advantages of the present invention will become apparent and comprehensible in the embodiment description made with reference to the following accompanying leading outs, where:
FIG. 1 is a schematic structural diagram of a battery;
FIG. 2 is a schematic structural diagram of a battery with a housing being removed;
FIG. 3 is a schematic structural diagram of an electrode core set;
FIG. 4 is a schematic sectional view of FIG. 3 taken along line IV-IV;
FIG. 5 is a schematic sectional view of FIG. 1 taken along line V-V;
FIG. 6 is a schematic sectional view of FIG. 5 in a non-claimed example;
FIG. 7 is a schematic sectional view of FIG. 5 in still another non-claimed example;
FIG. 8 is a schematic sectional view of FIG. 1 taken along line VIII-VIII in another non-claimed example;
FIG. 9 is a schematic sectional view of FIG. 8 in an embodiment of the present invention;
FIG. 10 is an exploded view of a battery with a housing being removed according to an embodiment of the present invention;
FIG. 11 is a schematic structural diagram of a battery pack according to an embodiment of the present invention; and
FIG. 12 is a schematic diagram of an automobile according to an embodiment of the present invention.

### DETAILED DESCRIPTION

Embodiments of the present invention are described in detail below, and examples of the embodiments are shown in accompanying leading outs, where the same or similar elements or the elements having same or similar functions are denoted by the same or similar reference numerals throughout the description. The embodiments described below with reference to the accompanying leading outs are exemplary, and are intended to explain the present invention and cannot be construed as a limitation to the present invention.

In the description of the present invention, it should be understood that orientation or position relationships indicated by the terms such as "center", "upper", "lower", "front", "rear", "left", "right", "vertical", "horizontal", "top", "bottom", "inside", and "outside" are based on orientation or position relationships shown in the accompanying leading outs, and are used only for ease and brevity of illustration and description of the present invention, rather than indicating or implying that the mentioned apparatus or component must have a particular orientation or must be constructed and operated in a particular orientation. Therefore, such terms should not be construed as limiting of the present invention.

It should be noted that, the terms "first" and "second" are used for descriptive purposes only and should not be construed as indicating or implying relative importance or implicitly indicating the number of technical features indicated. Therefore, features defining "first" and "second" may explicitly or implicitly include one or more such features. Further, in the description of the present invention, unless otherwise stated, "multiple" means two or more than two.

Provided is a battery 100, including a housing 10 and multiple electrode core sets 20 encapsulated in the housing 10. Every two adjacent electrode core sets 20 are connected in series. The electrode core set 20 includes an encapsulation film 201 and at least one electrode core 202, and the electrode core 202 is arranged in an accommodating cavity formed by the encapsulation film 201. The electrode core set 20 includes a first electrode 21 and a second electrode 22 for leading out current. The first electrode 21 and the second electrode 22 protrude out of the encapsulation film 201. The first electrode 21 of one of the two adjacent electrode core sets 20 is electrically connected to the second electrode 22 of the other electrode core set. A gap between the two adjacent electrode core sets 20 is filled with an insulating material so as to form an insulating spacer 30 between the two adjacent electrode core sets 20. A connection part of the two adjacent electrode core sets 20 is arranged in the insulating spacer 30.

The beneficial effects of such a battery are as follows:

In such a battery, the insulating spacer 30 is arranged between every two adjacent electrode core sets 20, and the connection part of the two electrode core sets 20 is arranged in the insulating spacer 30. In this way, the insulating spacer 30 can be well utilized to fix the electrode core sets 20, so as to prevent the relative movement between the electrode core sets 20, maintain the reliable connection between the electrode core sets 20 and increase the strength of the connection part, thereby preventing the connection part between the two adjacent electrode core sets 20 from being twisted or broken during the use of the battery 100, and improving the connection stability between the electrode core sets 20.

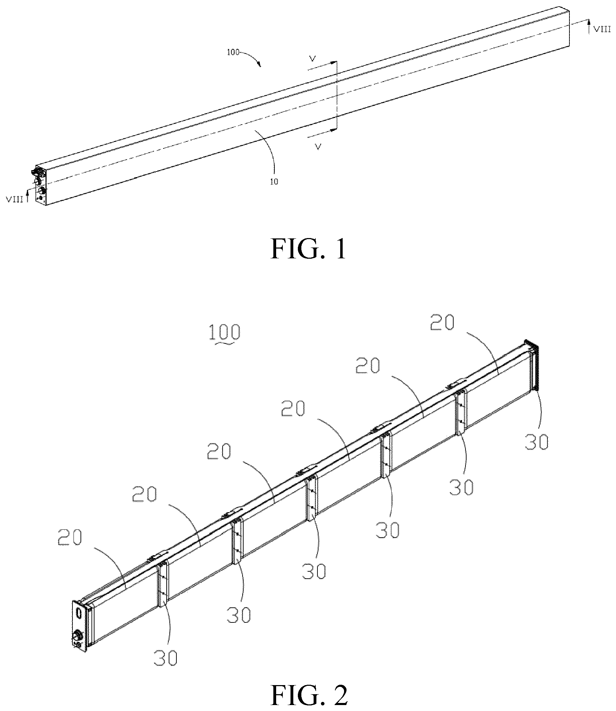

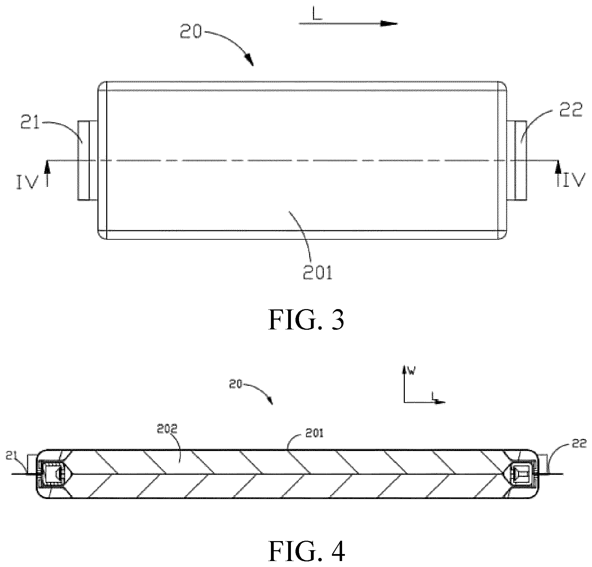

Referring to FIG. 1 and FIG. 2, a battery 100 includes a housing 10 and multiple electrode core sets 20 encapsulated in the housing 10, and every two adjacent electrode core sets 20 are connected in series. Referring to FIG. 3 and FIG. 4, the electrode core set 20 includes an encapsulation film 201 and at least one electrode core 202, and the electrode core 202 is arranged in an accommodating cavity formed by the encapsulation film 201. In some examples of the present invention, the encapsulation film 201 is an aluminum-plastic composite film or a polymer material composite film. The electrode core set 20 includes a first electrode 21 and a second electrode 22 for leading out current. One of the first electrode 21 and the second electrode 22 is a positive electrode, and the other is a negative electrode. The first electrode 21 and the second electrode 22 protrude out of the encapsulation film 201. The first electrode 21 of one of the two adjacent electrode core sets 20 is electrically connected to the second electrode 22 of the other electrode core set. A gap between the two adjacent electrode core sets 20 is filled with an insulating material so as to form an insulating spacer 30 between the two adjacent electrode core sets 20. A connection part of the two adjacent electrode core sets 20 is arranged in the insulating spacer 30.

In some examples of the present invention, a length of the battery 100 extends along a first direction L, a thickness of the electrode core set 20 extends along a second direction W. The second direction W and the first direction L are perpendicular to each other. A length of the electrode core set 20 extends along the first direction L, and the multiple electrode core sets 20 are arranged along the first direction L. In addition, the first electrode 21 and the second electrode 22 of the electrode core set 20 are arranged at two opposite ends of the electrode core set 20 along the first direction L. Besides, the two electrode core sets 20 that are connected in series are two electrode core sets 20 that are adjacent to each other, that is, in the embodiments of the present invention, every two adjacent electrode core sets 20 are connected in series. Therefore, the multiple electrode core sets 20 are arranged in an end-to-end manner. In this manner, it is easy to realize series connection between every two adjacent electrode core sets 20, and the connecting structure is simple. In addition, in this manner, it is easy to manufacture the battery 100 with a larger length. Thereby, when the battery 100 is to be mounted into a shell of the battery pack 200, there is no need to provide support structures such as cross beams and longitudinal beams. Instead, by using the housing 10 of the battery 100 as the support, the battery 100 is directly mounted on the shell of the battery pack 200, which thereby can save the internal space of the battery pack 200, improve the volume utilization of the battery pack 200, increase the energy density of the battery pack 200 and reduce the weight of the battery pack 200.

In some examples of the present invention, the multiple electrode core sets 20 may form two electrode core strings. That is, the battery 100 may contain two electrode core strings, which may be connected in series. For example, the two electrode core strings may be connected in a U shape, that is, the corresponding electrodes of the two electrode core strings at the same end in a first direction L are connected in series, and the corresponding electrodes of the two electrode core strings at the other end in the first direction L are respectively positive and negative electrodes of the battery.

Each electrode core string has multiple electrode core sets 20, the two electrode core strings are arranged along a second direction W, and the multiple electrode core sets 20 in each electrode core string are arranged along the first direction L. In addition, the first electrode 21 and the second electrode 22 of the electrode core set 20 are arranged at two opposite ends of the electrode core set 20 along the first direction L, and the two electrode core sets 20 that are connected in series are two electrode core sets 20 that are adjacent to each other. That is, in the embodiments of the present invention, for the multiple electrode core sets 20 in each electrode core string, every two adjacent electrode core sets 20 are connected in series. Therefore, the multiple electrode core sets 20 in each electrode core string are arranged in an end-to-end manner. In this manner, it is easy to realize series connection between every two adjacent electrode core sets 20, and the connecting structure is simple.

Of course, in other embodiments, the battery 100 may be provided with only one electrode core string. That is, all the electrode core sets 20 in the battery 100 are sequentially arranged along the first direction L, and all the electrode core sets 20 are connected in series to form one electrode core string.

When the multiple electrode core sets 20 are connected in series, the connection parts between the electrode core sets 20 become the vulnerable parts of the whole battery 100, and are prone to be twisted and broken during the use of the battery 100, resulting in connection failure. Moreover, the multiple electrode core sets 20 are connected in series in the battery 100, which increases the risk of the battery moving in the first direction L. Therefore, in the present invention, the insulating spacer 30 formed by filling the gap between two adjacent electrode core sets 20 with the insulating material is arranged between the two electrode core sets 20 connected in series. The insulating spacer 30 can adhere to the two adjacent electrode core sets 20, so that the connection between the insulating spacer 30 and the two electrode core sets 20 adjacent thereto is more stable and reliable. Moreover, the connection part of the two electrode core sets 20 connected in series is arranged in the insulating spacer 30, which can increase the strength of the connection part between the first electrode 21 and the second electrode 22. Thereby, the insulating spacer 30 can be utilized to better fix the electrode core sets 20, so as to prevent the relative movement between the electrode core sets 20, maintain the effective connection between the electrode core sets 20 and increase the strength of the connection part, thereby preventing the connection part between the electrode core sets 20 from being twisted or broken during the use of the battery, and improving the connection stability between the electrode core sets 20.

In some embodiments of the present invention, the two electrode core sets 20 that are connected in series are two electrode core sets 20 that are adjacent to each other, and the insulating spacer 30 is arranged between the two adjacent electrode core sets 20.

Thereby, the insulating spacer 30 is arranged between every two adjacent electrode core sets 20. The insulating spacer 30 can separate two adjacent electrode core sets 20, and the insulating spacer 30 and the housing 10 are positioned relative to each other, which can further prevent the electrode core sets 20 from moving along its first direction L.

In some embodiments of the present invention, when the battery 100 contains two electrode core strings, on each side of the insulating spacer 30 along the first direction L, two electrode core sets 20 are arranged, so that the number of the electrode core sets 20 can be increased, thereby increasing the electric capacity of the battery 100.

In some other embodiments of the present invention, only one electrode core set 20 is arranged in the second direction W, and the multiple electrode core sets 20 all extend along the first direction L. That is, on each side of the insulating spacer 30 along the first direction L, only one electrode core set 20 is arranged. This situation may be understood as only one electrode core string being arranged in the battery 100.

In one embodiment of the present invention, the housing 10 is a metal housing, for example, an aluminum housing. Of course, other metals may also be selected as required. Thereby, the housing 10 has sufficient strength to avoid being damaged or deformed, thereby improving the safety of the battery 100.

In some examples of the present invention, the encapsulation film 201 is an aluminum-plastic composite film or a polymer material composite film. The first electrode 21 and the second electrode 22 of the electrode core set 20 protrude out of the encapsulation film 201. That is, in the embodiments of the present invention, the insulating spacer 30 is an insulating spacer 30 arranged outside the encapsulation film 201. The connection reliability between the electrode core sets 20 is improved by arranging the insulating spacer 30 outside the encapsulation film.

In some embodiments of the present invention, the electrode core mentioned may also be understood as an electrode core commonly used in the field of power batteries, and the electrode core and the electrode core set 20 are components inside the housing 10 of the battery 100 and cannot be understood as the battery itself. The electrode core may be an electrode core formed by winding, and the electrode core generally refers to a component that is not completely sealed. Thus, the battery 100 mentioned in the present invention cannot be simply understood as a battery module or a battery pack for inclusion of multiple electrode cores. In the present invention, the electrode core set 20 may be composed of one single electrode core. The electrode core set may also include multiple electrode cores, and the multiple electrode cores are connected in parallel to form the electrode core set 20.

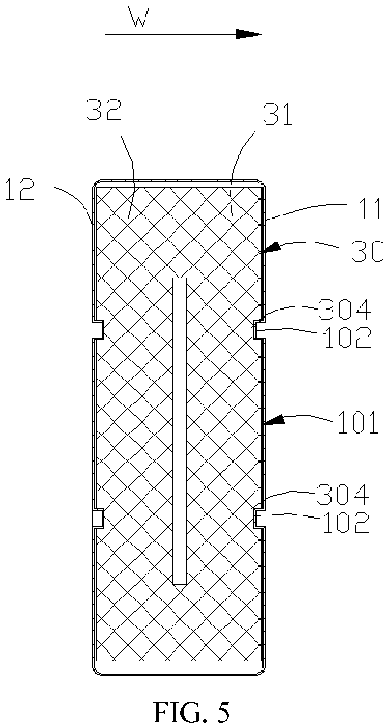

Referring to FIG. 5 together, in a non-claimed example, the spacer 30 includes an outer peripheral surface 302 facing an inner surface of the housing 10, and at least one first positioning portion 304 is formed on the outer peripheral surface 302 of the spacer 30. Second positioning portions 102 corresponding to the first positioning portions 304 one by one are formed on the inner surface 101 of the housing 10. The first positioning portion 304 is mated with the corresponding second positioning portion 102 so as to fix the spacer 30 to the housing 10.

Thereby, the first positioning portion 304 of the spacer 30 and the second positioning portion 102 on the housing 10 are mated with each other to fix the spacer 30 to the housing 10, which can further prevent the relative movement between the electrode core sets 20, thereby improving the effect of preventing movement.

In a non-claimed example, referring to FIG. 5, the first positioning portion 304 is a groove formed by recessing the outer peripheral surface 302 of the insulating spacer 30 to the inside of the insulating spacer 30. The second positioning portion 102 is a protrusion formed on the inner surface 101 of the housing 10, and the protrusion is embedded into the groove so as to fix the insulating spacer 30 to the housing 10.

Thereby, by directly forming the groove on the insulating spacer 30 and directly forming the protrusion on the housing 10 and through the mating between the protrusion on the housing 10 and the groove on the insulating spacer 30, the insulating spacer 30 and the housing 10 are fixed and positioned relative to each other, which can further prevent the electrode core sets 20 from moving and also save the space occupied by the battery 100.

As shown in FIG. 5, the insulating spacer 30 may be connected to a surface of the housing 10 with the largest area (which may also be referred to as "large surface"). Specifically, a thickness of the battery 100 extends along a second direction W. The second direction W is perpendicular to the first direction L. The housing 10 of each battery 100 includes a first side surface 11 and a second side surface 12 on two opposite sides of the second direction W, and the first side surface 11 and the second side surface 12 are the largest surfaces of the battery 100. The first side surface 11 and the second side surface 12 of the housing 10 are respectively provided with the second positioning portion 102. An inner circumferential surface of the insulating spacer 30 corresponding to the first side surface 11 and the second side surface 12 is provided with the first positioning portion 304. The first positioning portion 304 and the second positioning portion 102 are in one-to-one correspondence so as to be mated, so that the insulating spacer 30 is fixed to the housing 10.

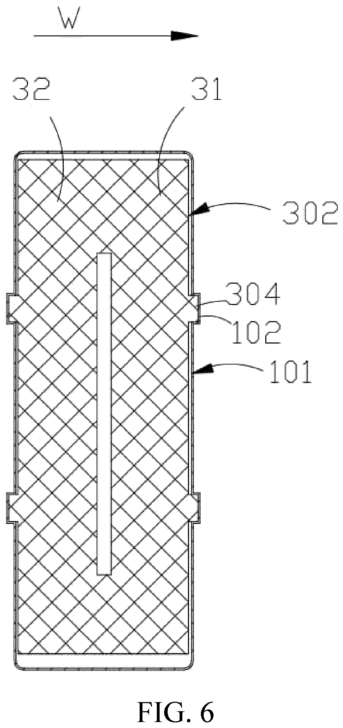

In another non-claimed example, referring to FIG. 6, the first positioning portion 304 may also be a protrusion formed on the outer peripheral surface 302 of the insulating spacer 30, the second positioning portion 102 may be a groove formed on the inner surface 101 of the housing 10, and the protrusion is embedded into the groove so as to fix the insulating spacer 30 to the housing 10.

Thereby, by directly forming the protrusion on the insulating spacer 30 and directly forming the groove on the inner surface 101 of the housing 10 and through the mating between the groove on the housing 10 and the protrusion on the insulating spacer 30, the insulating spacer 30 and the housing 10 are fixed and positioned relative to each other, which can further prevent the electrode core sets 20 from moving and also save the space occupied by the battery 100.

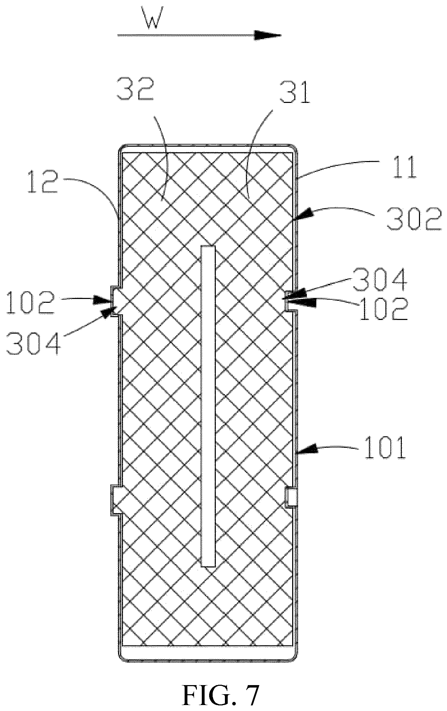

In still another non-claimed example, referring to FIG. 7, the second positioning portion 102 on the first side surface 11 is a protrusion formed on the inner surface 101 of the housing 10, the first positioning portion 304 is a groove formed on the outer peripheral surface 302 of the insulating spacer 30 corresponding to the protrusion, and the protrusion is mated with the groove. The second positioning portion 102 on the second side surface 12 is a groove formed on the inner surface 101 of the housing 10, the first positioning portion 304 is a protrusion formed on the outer peripheral surface 302 of the insulating spacer 30 corresponding to the groove, and the protrusion is mated with the groove.

Thereby, on the housing 10 of the battery 100, the second positioning portion 102 on the first side surface 11 is the protrusion, and the corresponding first positioning portion 304 is the groove. The second positioning portion 102 on the second side surface 12 is the groove, and the corresponding first positioning portion 304 is the protrusion. The protrusion is mated with the groove, so that the insulating spacer 30 and the housing 10 are fixed and positioned relative to each other, and the housing 10 and the housing 10 are also fixed and positioned relative to each other, which can further prevent the electrode core sets 20 from moving and also prevent the relative movement between the housings 10 of adjacent batteries 100.

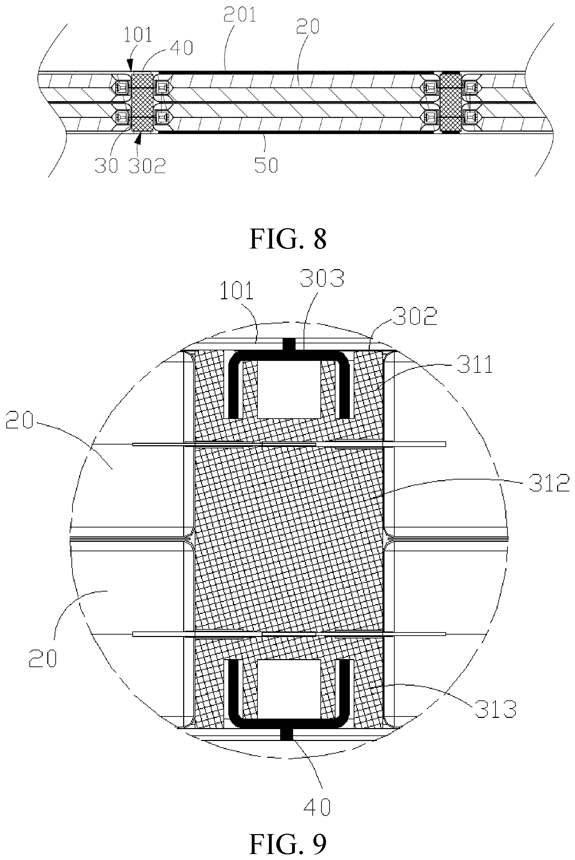

Referring to FIG. 8, in a non-claimed example, the insulating spacer 30 includes an outer peripheral surface 302 facing an inner surface of the housing 10. The housing 10 includes the inner surface 101 facing the insulating spacer 30. A first adhesive layer 40 is arranged between the outer peripheral surface 302 of the insulating spacer 30 and the inner surface of the housing 10 so as to fix the insulating spacer 30 to the housing 10.

Thereby, by arranging the first adhesive layer 40 between the outer peripheral surface 302 of the insulating spacer 30 and the inner surface of the housing 10, the insulating spacer 30 is fixed to the housing 10, which can further prevent the relative movement between the electrode core sets 20, thereby improving the effect of preventing movement.

In another non-claimed example, the first adhesive layer 40 is a heat-sensitive adhesive. After the electrode core set 20 is mounted into the housing 10, the first adhesive layer 40 is heated by a preset temperature to become sticky, so as to fix the insulating spacer 30 to the housing 10. It should be noted that the first adhesive layer 40 is not sticky before the electrode core set 20 is mounted into the housing 10. After the electrode core set 20 is mounted into the housing 10, the first adhesive layer 40 is heated to become sticky, so that the insulating spacer 30 is fixed to the housing 10. In this way, the insulating spacer 30 can be fixed to the housing 10, and the mounting is convenient.

In some other non-claimed examples, the first adhesive layer 40 is a pressure-sensitive adhesive. The first adhesive layer 40 is not sticky before the electrode core set 20 is mounted into the housing 10. After the electrode core set 20 is mounted into the housing 10, the first adhesive layer 40 is compressed by a preset pressure to become sticky, so that the insulating spacer 30 is fixed to the housing 10. In this way, the insulating spacer 30 can be fixed to the housing 10, and the mounting is convenient.

Of course, in other non-claimed examples, the first adhesive layer 40 may also be another type of adhesive, such as a double-faced adhesive tape, which is not limited here.

It can be understood that the first adhesive layer 40 may be arranged on all of the outer peripheral surface 302 of the insulating spacer 30, or on part of the outer peripheral surface 302 of the insulating spacer 30, which is not limited here.

In some non-claimed examples, a second adhesive layer 50 is arranged between an outer surface of the electrode core set 20 and the inner surface 101 of the housing 10 so as to fix the electrode core set 20 to the housing 10.

Thereby, the electrode core set 20 is fixed to the housing 10 through the second adhesive layer 50, so that the electrode core set 20 is fixed more stably, which can further avoid the relative movement between the electrode core sets 20.

In some non-claimed examples, the second adhesive layer 50 is a heat-sensitive adhesive or a pressure-sensitive adhesive.

In some non-claimed examples, the second adhesive layer 50 is a heat-sensitive adhesive. After the electrode core set 20 is mounted into the housing 10, the second adhesive layer 50 is heated by a preset temperature to become sticky, so as to fix the electrode core set 20 to the housing 10. It should be noted that the second adhesive layer 50 is not sticky before the electrode core set 20 is mounted into the housing 10. After the electrode core set 20 is mounted into the housing 10, the second adhesive layer 50 is heated to become sticky, so that the electrode core set 20 is fixed to the housing 10. In this way, the electrode core set 20 can be fixed to the housing 10, and the mounting is convenient.

In some other non-claimed examples, the second adhesive layer 50 is a pressure-sensitive adhesive. The second adhesive layer 50 is not sticky before the electrode core set 20 is mounted into the housing 10. After the electrode core set 20 is mounted into the housing 10, the second adhesive layer 50 is compressed by a preset pressure to become sticky, so that the electrode core set 20 is fixed to the housing 10. In this way, the electrode core set 20 can be fixed to the housing 10, and the mounting is convenient.

Of course, in other non-claimed examples, the second adhesive layer 50 may also be another type of adhesive, such as a double-faced adhesive tape, which is not limited here.

It can be understood that in one of the non-claimed examples, the second adhesive layer 50 is arranged on a large surface among the outer surfaces of the encapsulation film 201 of the electrode core set 20. The large surface refers to one or two outer surfaces among the outer surfaces of the encapsulation film 201 of the electrode core set 20 with larger area. In other non-claimed examples, the second adhesive layer 50 may be arranged on any one of the outer surfaces of the encapsulation film 201 of the electrode core set 20, which is not limited here.

According to the present invention, referring to FIG. 9, the housing 10 is a metal housing. The insulating spacer 30 includes an outer peripheral surface 302 facing an inner surface 101 of the housing 10. The outer peripheral surface 302 of the insulating spacer 30 is provided with a metal member 303. The metal member 303 is connected to the housing 10 so as to fix the insulating spacer 30 to the housing 10.

Thereby, in the present invention, the insulating spacer 30 includes the outer peripheral surface 302 facing the inner surface 101 of the housing 10. The outer peripheral surface 302 of the insulating spacer 30 is provided with the metal member 303. The metal member 303 is connected to the housing 10 so as to fix the insulating spacer 30 to the housing 10, which can further prevent the relative movement between the electrode core sets 20, thereby improving the effect of preventing movement.

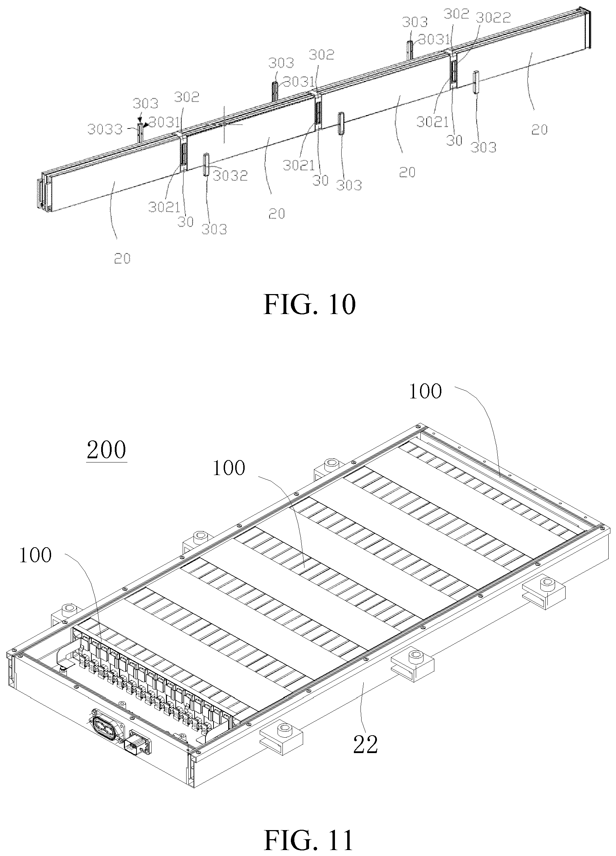

According to the present invention, referring to FIG. 10, in order to fix the metal member 303 to the insulating spacer 30, the outer peripheral surface 302 of the insulating spacer 30 is provided with a snap-fit groove 3021. The metal member 303 includes a mating portion 3031 and a connecting portion 3032 connected to the mating portion 3031. The mating portion 3031 is snapped into the snap-fit groove 3021. The connecting portion 3032 is exposed on the outer peripheral surface 302 so as to be connected to the housing 10.

Thereby, with the snap fit between the snap-fit groove 3021 and the mating portion 3031, the connection stability between the insulating spacer 30 and the metal member 303 is improved.

In some embodiments of the present invention, the mating portion 3031 is multiple mating pieces 3033 vertically protruding from a periphery of the connecting portion 3032, and there is a clearance between the mating pieces 3033. For example, in this embodiment, there are 6 mating pieces 3033, and there is a clearance between every two mating pieces 3033. Similarly, a clamping slot 3022 corresponding to each of the mating pieces 3033 is arranged inside the snap-fit groove 3021. For example, in this embodiment, 6 clamping slots 3022 may be arranged inside the snap-fit groove 3021, and the six clamping slots 3022 are attached to side walls of the snap-fit groove 3021. Each mating piece 3033 is correspondingly inserted into one clamping slot 3022.

Thereby, the mating pieces 3033 make the mating portion 3031 have good interchangeability, and thus can be mated with the corresponding clamping slots 3022 more easily.

In some embodiments of the present invention, the metal member 303 is of a groove structure, and a shape of the snap-fit groove 3021 is matched with that of an opening of the groove structure. A side wall of the groove structure is snapped into the snap-fit groove 3021 as the mating portion 3031, and a bottom wall of the groove of the groove structure is connected to the housing 10 as the connecting portion 3032.

Thereby, the metal member 303 occupies less space, which makes the overall structure of the battery 100 more compact.

In some embodiments of the present invention, the snap-fit groove 3021 and the mating portion 3031 form an interference fit so as to be fixed to each other.

Thereby, with the snap fit between the snap-fit groove 3021 and the mating portion 3031, the connection stability between the insulating spacer 30 and the metal member 303 is improved.

In a non-claimed example, the metal member 303 is integrally formed with the insulating spacer 30 by insert molding, and the metal member is made of an aluminum material.

Thereby, the process of mounting the metal member 303 is avoided, and the connection stability between the metal member 303 and the insulating spacer 30 is improved.

In a non-claimed example, the metal member 303 is fixed to the housing 10 by welding, for example, laser welding. As shown in FIG. 9, a laser welding joint 40 is formed between the metal member 303 and the housing 10.

Thereby, the connection stability between the metal member 303 and the housing 10 is improved, which can prevent the relative movement between the electrode core sets 20 along the first direction L, maintain the effective connection between the electrode core sets 20 and increase the mechanical strength of the battery 100, thereby preventing the battery 100 from being twisted or broken during the use.

Referring to FIG. 9, when the battery 100 contains two electrode core strings, i.e., when on each side of the insulating spacer 30 along the first direction L, two electrode core sets 20 are arranged, the insulating spacer 30 includes a first insulating part 311, a second insulating part 312 and a third insulating part 313 that are arranged sequentially along the second direction W. The second insulating part 312 is arranged between the first insulating part 311 and the third insulating part 313. Outer sides of the first insulating part 311 and the third insulating part 313 are respectively provided with the snap-fit groove 3021. A through hole 301 is formed between the first insulating part 311 and the second insulating part 312 for allowing the connection part of one of the electrode core strings to pass through. Another through hole (not shown) is formed between the second insulating part 312 and the third insulating part 313 for allowing the connection part of the other electrode core string to pass through.

In some embodiments of the present invention, the battery 100 is substantially a cuboid. The battery 100 has a length L, a thickness W and a height H. The length L is greater than the height H. The height H is greater than the thickness W. The length of the battery 100 is 400-2500 mm. A ratio of the length to the height of the battery 100 is 4-21.

It should be noted that "the battery 100 is substantially a cuboid" can be understood as "the battery 100 may be a cuboid or cube, or roughly a cuboid or cube but irregularly shaped in part, or approximately a cuboid or cube that has notches, protrusions, chamfers, arcs and bends in part.

The present invention further provides a battery pack, including multiple batteries 100 provided by the present invention or multiple battery modules provided by the present invention. Referring to FIG. 11, the battery pack 200 provided by the present invention includes a tray 22 and the batteries 100 arranged on the tray 22.

The present invention provides an automobile 1000, including: a battery pack 200 provided by the present invention.

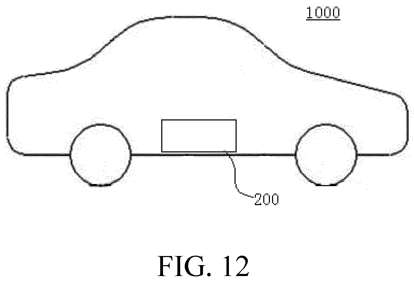

Referring to FIG. 12, the automobile provided by the present invention includes: the battery pack 200.

## Claims

1. A battery (100), comprising a housing (10) and a plurality of electrode core sets (20) encapsulated in the housing, wherein every two adjacent electrode core sets (20) are connected in series, the electrode core set comprises an encapsulation film (201) and at least one electrode core (202), and the electrode core (202) is arranged in an accommodating cavity formed by the encapsulation film; and
the electrode core set (20) comprises a first electrode (21) and a second electrode (22) for leading out current, the first electrode and the second electrode protrude out of the encapsulation film (201), the first electrode (21) of one of the two electrode core sets (20) is connected to the second electrode (22) of the other electrode core set, a gap between the two adjacent electrode core sets (20) is filled with an insulating material so as to form an insulating spacer (30) between the two adjacent electrode core sets, and a connection part of the two adjacent electrode core sets is arranged in the insulating spacer (30);
wherein the insulating spacer (30) comprises an outer peripheral surface (302) facing an inner surface (101) of the housing (10), the outer peripheral surface of the insulating spacer (30) is provided with a metal member (303), and the metal member is connected to the housing (10) so as to fix the insulating spacer to the housing; and
wherein the outer peripheral surface (302) of the insulating spacer (30) is provided with a snap-fit groove (3021), the metal member (303) comprises a mating portion (3031) and a connecting portion (3032) connected to the mating portion (3031), the mating portion is snapped into the snap-fit groove (3021), and the connecting portion (3032) is exposed on the outer peripheral surface (302) so as to be connected to the housing (10).

2. The battery according to claim 1, wherein the metal member (303) is of a groove structure, and a shape of the snap-fit groove (3021) is matched with that of an opening of the groove structure; and a side wall of the groove structure is snapped into the snap-fit groove (3021) as the mating portion (3031), and a bottom wall of the groove of the groove structure is connected to the housing (10) as the connecting portion (3032).

3. The battery according to any of claims 1 to 2, wherein a length of the battery (100) extends along a first direction (L), a length of the electrode core set (20) extends along the first direction, and the plurality of electrode core sets (20) are arranged along the first direction (L).

4. A battery pack (200), comprising a plurality of batteries (100) according to any of claims 1 to 3.

5. An automobile (1000), comprising the battery pack (200) according to claim 4.

## Patentansprüche

1. Batterie (100), die ein Gehäuse (10) und eine Vielzahl von Elektrodenkernsätzen (20) umfasst, die in dem Gehäuse eingekapselt sind, wobei jeweils zwei benachbarte Elektrodenkernsätze (20) in Reihe geschaltet sind, der Elektrodenkernsatz einen Einkapselungsfilm bzw. eine Verkapselungsfolie (201) und mindestens einen Elektrodenkern (202) umfasst und der Elektrodenkern (202) in einem Aufnahmehohlraum angeordnet ist, der durch den Einkapselungsfilm gebildet wird; und
der Elektrodenkernsatz (20) eine erste Elektrode (21) und eine zweite Elektrode (22) zum Herausfü hren von Strom umfasst, die erste Elektrode und die zweite Elektrode aus der Verkapselungsfolie (201) herausragen, die erste Elektrode (21) von einem der beiden Elektrodenkernsätze (20) mit der zweiten Elektrode (22) des anderen Elektrodenkernsatzes verbunden ist, ein Spalt zwischen den beiden benachbarten Elektrodenkernsätzen (20) mit einem isolierenden Material gefüllt ist, um einen isolierenden Abstandshalter (30) zwischen den beiden benachbarten Elektrodenkernsätzen zu bilden, und ein Verbindungsteil der beiden benachbarten Elektrodenkernsätze in dem isolierenden Abstandshalter (30) angeordnet ist;
wobei der isolierende Abstandshalter (30) eine äußere Umfangsfläche (302) aufweist, die einer Innenfläche (101) des Gehäuses (10) zugewandt ist, die äußere Umfangsfläche des isolierenden Abstandshalters (30) mit einem Metallelement (303) versehen ist und das Metallelement mit dem Gehäuse (10) verbunden ist, um den isolierenden Abstandshalter an dem Gehäuse zu befestigen; und
wobei die äußere Umfangsfläche (302) des isolierenden Abstandshalters (30) mit einer Einschnappnut bzw. Einschnapprille (3021) versehen ist, das Metallelement (303) einen Eingriffsabschnitt (3031) und einen mit dem Eingriffsabschnitt (3031) verbundenen Verbindungsabschnitt (3032) umfasst, der Eingriffsabschnitt in die Einschnappnut (3021) eingerastet ist und der Verbindungsabschnitt (3032) an der äußeren Umfangsfläche (302) freiliegt, um mit dem Gehäuse (10) verbunden zu werden.

2. Batterie gemäß Anspruch 1, wobei das Metallelement (303) aus einer Rillenstruktur besteht und eine Form der Einschnapprille (3021) mit der einer Öffnung der Rillenstruktur übereinstimmt; und eine Seitenwand der Rillenstruktur in die Einschnapprille (3021) als Gegenstück (3031) eingerastet ist und eine Bodenwand der Rille der Rillenstruktur mit dem Gehäuse (10) als Verbindungsstück (3032) verbunden ist.

3. Batterie gemäß einem der Ansprüche 1 bis 2, wobei sich eine Länge der Batterie (100) entlang einer ersten Richtung (L) erstreckt, eine Länge des Elektrodenkernsatzes (20) sich entlang der ersten Richtung erstreckt und die Vielzahl von Elektrodenkernsätzen (20) entlang der ersten Richtung (L) angeordnet sind.

4. Batteriepack (200), umfassend eine Vielzahl von Batterien (100) gemäß einem der Ansprüche 1 bis 3.

5. Ein Kraftfahrzeug (1000), das das Batteriepack (200) gemäß Anspruch 4 umfasst.

## Revendications

1. Batterie (100), comprenant un boîtier (10) et plusieurs ensembles d'électrodes (20) encapsulés dans le boîtier, dans lequel tous les deux ensembles d'électrodes adjacents (20) sont connectés en série, l'ensemble d'électrodes comprend un film d'encapsulation (201) et au moins une électrode (202), et l'électrode (202) est disposée dans une cavité de logement formée par le film d'encapsulation ; et
l'ensemble d'électrodes (20) comprend une première électrode (21) et une deuxième électrode (22) pour conduire le courant, la première électrode et la deuxième électrode font saillie hors du film d'encapsulation (201), la première électrode (21) de l'un des deux ensembles d'électrodes (20) est connectée à la deuxième électrode (22) de l'autre ensemble d'électrodes, un espace entre les deux noyaux d'électrodes adjacents (20) est rempli d'un matériau isolant de manière à former une entretoise isolante (30) entre les deux noyaux d'électrodes adjacents, et une partie de connexion des deux noyaux d'électrodes adjacents est disposée dans l'entretoise isolante (30) ;
dans lequel l'entretoise isolante (30) comprend une surface périphérique extérieure (302) faisant face à une surface intérieure (101) du boîtier (10), la surface périphérique extérieure de l'entretoise isolante (30) est prévue avec un élément métallique (303), et l'élément métallique est relié au boîtier (10) de manière à fixer l'entretoise isolante au boîtier ; et
dans lequel la surface périphérique extérieure (302) de l'entretoise isolante (30) est prévue avec une rainure d'encliquetage (3021), l'élément métallique (303) comprend une partie d'accouplement (3031) et une partie de connexion (3032) reliée à la partie d'accouplement (3031), la partie d'accouplement est encliquetée dans la rainure d'encliquetage (3021), et la partie de connexion (3032) est exposée sur la surface périphérique extérieure (302) de manière à être reliée au boîtier (10).

2. Batterie selon la revendication 1, dans laquelle l'élément métallique (303) a une structure de rainure, et une forme de la rainure d'encliquetage (3021) est mise en correspondance avec celle d'une ouverture de la structure de rainure ; et une paroi latérale de la structure de rainure est encliquetée dans la rainure d'encliquetage (3021) en tant que partie d'accouplement (3031), et une paroi inférieure de la rainure de la structure de rainure est reliée au boîtier (10) en tant que partie de connexion (3032).

3. Batterie selon l'une quelconque des revendications 1 à 2, dans laquelle une longueur de la batterie (100) s'étend le long d'une première direction (L), une longueur de l'ensemble d'âmes d'électrodes (20) s'étend le long de la première direction, et la pluralité d'ensembles d'âmes d'électrodes (20) sont disposés le long de la première direction (L).

4. Bloc de batteries (200), comprenant une pluralité de batteries (100) selon l'une quelconque des revendications 1 à 3.

5. Automobile (1000), comprenant le bloc de batteries (200) selon la revendication 4.
